# EUROPÄISCHE PATENTSCHRIFT

(11) **EP 1 159 545 B1**
(45) Veröffentlichungstag und Bekanntmachung des Hinweises auf die Patenterteilung: **11.06.2003**
(21) Anmeldenummer: 00916898.0
(22) Anmeldetag: 03.03.2000
(51) Int. Cl.: F16D 25/08

(54) **HYDRAULISCHE KUPPLUNGSBETÄTIGUNGSEINHEIT**
HYDRAULIC CLUTCH ACTUATOR
UNITE DE COMMANDE HYDRAULIQUE D'EMBRAYAGE

(30) Priorität: 10.03.1999 DE 19910631
(43) Veröffentlichungstag der Anmeldung: 05.12.2001
(73) Patentinhaber: Carl Freudenberg KG, 69469 Weinheim (DE)
(72) Erfinder: HIRSCH, Volker, D-67346 Speyer (DE); ECKEL, Hans-Gerd, D-69514 Laudenbach (DE)
(86) Internationale Anmeldenummer: EP0001844
(87) Internationale Veröffentlichungsnummer: WO00053948

(56) Entgegenhaltungen:
- DE-A- 4 236 377
- US-A- 3 955 660
- US-A- 5 183 141

## Beschreibung

### Technisches Gebiet

Die Erfindung betrifft eine Kupplung mit einer Druckplatte, welche in einer eingekuppelten Stellung eine Mitnehmerscheibe gegen eine Gegenfläche drückt, wobei die Druckplatte zum Trennen der Kupplung durch eine Ausrückvorrichtung in eine ausgekuppelte Stellung bewegt werden kann, in der die Druckplatte die Mitnehmerscheibe nicht gegen die Gegenfläche drückt, wobei die Ausrückvorrichtung hydraulisch betätigbar ist und ein erstes Hydraulikelement und ein relativ zu diesem bewegbares zweites Hydraulikelement umfaßt, wobei das erste und das zweite Hydraulikelement an einen gemeinsamen Hydraulikraum angrenzen und über die in den Hydraulikraum aufgenommene Hydraulikflüssigkeit in Wirkverbindung stehen, wobei das erste Hydraulikelement wenigstens zwei erste Führungsflächen aufweist, die mit zweiten Führungsflächen des zweiten Hydraulikelements zusammenwirken, und wobei die wenigstens zwei ersten Führungsflächen in radialer Richtung außen zu den zweiten Führungsflächen angeordnet sind.

### Stand der Technik

Es sind Kupplungen bekannt, die Ringzylinder mit einer inneren Führungsfläche und einer konzentrisch dazu angeordneten äußeren Führungsfläche aufweisen, welche in gleicher axialer Position einen ringförmigen Kolben umschließen. Nachteilig hierbei ist, daß der Ringzylinder, welcher den Hydraulikraum an drei Seiten begrenzt, schwierig herstellbar ist, da die einander zugewandten Führungsflächen einer Bearbeitung nur relativ schwierig zugänglich sind, was die Herstellungskosten erhöht.

Aus der US-A-5, 183, 141 ist eine Kupplung mit einer Druckplatte und einer Mitnehmerscheibe bekannt. Die Druckplatte kann durch eine hydraulisch betätigte Ausrückvorrichtung in eine ausgekuppelte Stellung bewegt werden. Dabei umfasst die Ausrückvorrichtung ein erstes Hydraulikelement und ein relativ zu diesem bewegbares zweites Hydraulikelement, welche an einen gemeinsamen Hydraulikraum angrenzen und über die in dem Hydraulikraum aufgenommene Hydraulikflüssigkeit in Wirkverbindung stehen. Das erste Hydraulikelement weist zwei erste Führungsflächen auf, die mit zweiten Führungsflächen des zweiten Hydraulikelements zusammenwirken. Die ersten Führungsflächen sind in radialer Richtung außen zu den zweiten Führungsflächen angeordnet.

Vergleichbare Kupplungen sind aus der DE 42 36 377 A und der US 5,318,162 A bekannt.

### Darstellung der Erfindung

Der Erfindung liegt die Aufgabe zugrunde, eine Kupplungsbetätigung derart weiterzuentwickeln, daß diese besonders einfach und kostengünstig montierbar ist.

Diese Aufgabe wird bei einer Kupplung der eingangs genannten Art durch die Merkmale von Anspruch 1 gelöst.

Durch die erfindungsgemäße Anordnung wird erreicht, daß alle Führungsflächen des ersten Hydraulikelements in radialer Richtung nach innen und alle Führungsflächen des zweiten Hydraulikelements in radialer Richtung nach außen weisen. Infolgedessen können die Führungsflächen der Hydraulikelemente besonders einfach radial bearbeitet werden.

Die Montage von Motor und Getriebe wird dadurch vereinfacht, daß an dem ersten und/oder dem zweiten Hydraulikelement im Bereich einer der Führungsflächen ein Haltering angeordnet ist, der bei einer ersten Betätigung der Kupplung durch die Relativbewegung von erstem und zweitem Hydraulikelement aus einer Halteposition in eine Endposition verschoben wird. Das erste beziehungsweise das zweite Hydraulikelement wird hierbei in eine Extremposition verschoben, so daß es zur Anlage der beiden Hydraulikelemente im Bereich des Hydraulikraums kommt und der Hydraulikraum das kleinste Volumen annimmt. Durch den Haltering wird auch verhindert, daß das erste und das zweite Hydraulikelement vor dem Einbau der Kupplung auseinanderfallen können.

Gemäß einer vorteilhaften Weiterbildung der Erfindung ist vorgesehen, daß die Ausrückvorrichtung einen Zugmechanismus umfaßt, der beim Trennen der Kupplung die Druckplatte aus der eingekuppelten Stellung in die ausgekuppelte Stellung zieht. Ein solcher ziehender Ausrücker erlaubt es, ein übersetzendes Hebelteil und dessen Widerlager wegzulassen. Die Kupplungsfeder kann nunmehr getrennt von dem Ausrücker in radialer Richtung außen angeordnet werden. Dabei ist der Zugmechanismus vorteilhafterweise mittels der ersten und der zweiten Hydraulikelemente betätigbar.

Eine weitere Verbesserung wird dadurch erzielt, daß das erste Hydraulikelement relativ zu einem Gehäuse der Kupplung festgelegt ist.

Gemäß einer Weiterbildung dieses Erfindungsgedankens ist vorgesehen, daß an dem ersten Hydraulikelement wenigsten ein Anschluß für Hydraulikflüssigkeit angeordnet ist. Dies hat den Vorteil, daß der Anschluß relativ zu dem Gehäuse der Kupplung unbeweglich ist.

Indem der Anschluß am höchsten Punkt des Hydraulikraums angeordnet ist, kann der Hydraulikraum besonders leicht entlüftet werden.

Gemäß einer alternativen Ausführungsform ist vorgesehen, daß das zweite Hydraulikelement relativ zu einem Gehäuse der Kupplung festgelegt ist.

Gemäß einer Weiterbildung dieses Erfindungsgedankens ist vorgesehen, daß der Haltering aus Kunststoff gefertigt ist.

Gemäß einer vorteilhaften Ausgestaltung der Erfindung ist vorgesehen, daß der Hydraulikraum durch im Bereich der Führungsbahnen angeordnete Dichtungsmittel abgedichtet ist.

Indem zwischen erstem und zweiten Hydraulikelement wenigstens eine Feder wirkt, welche das erste und das zweite Hydraulikelement in axialer Richtung auseinander drückt, werden die beiden Hydraulikelemente stets in einer definierten Position und damit das Ausrücklager unter Vorspannung gehalten.

### Kurzbeschreibung der Zeichnungen

- Figur 1: zeigt einen Querschnitt durch eine erfindungsgemäße Kupplung gemäß einer ersten Ausführungsform.
- Figur 2: zeigt eine erfindungsgemäße Kupplung gemäß einer zweiten Ausführungsform.
- Figur 3: zeigt eine erfindungsgemäße Kupplung gemäß einer dritten Ausführungsform.
- Figur 4: zeigt eine erfindungsgemäße Kupplung gemäß einer vierten Ausführungsform.

### Ausführung der Erfindung

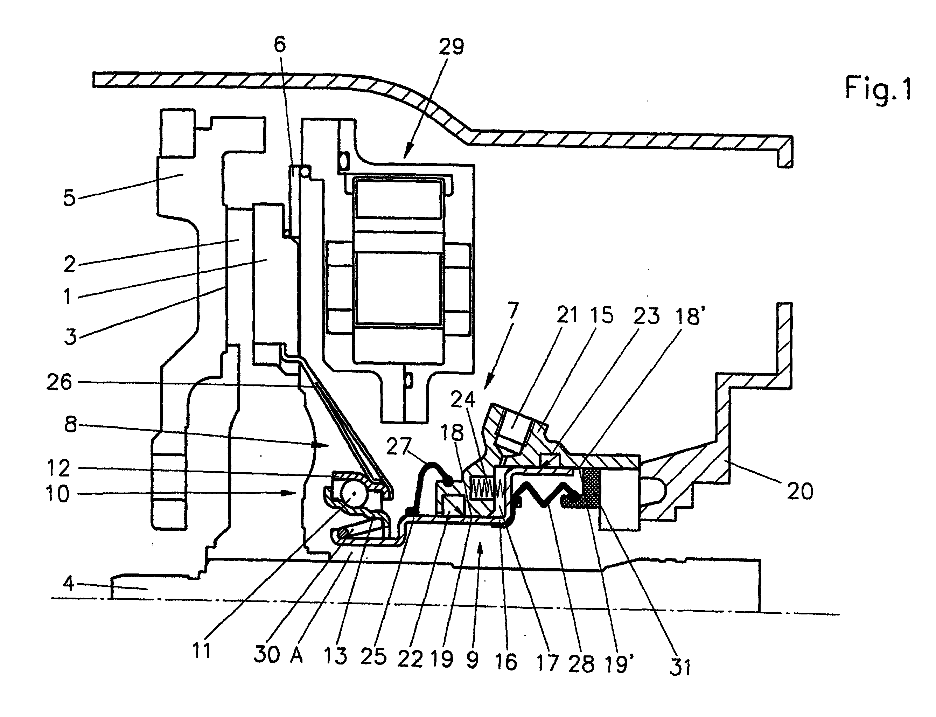

Figur 1 zeigt eine Kupplung für einen Personenkraftwagen, welche eine Druckplatte 1 umfaßt, welche in der dargestellten eingekuppelten Stellung einen Mitnehmer 2 gegen eine Gegenfläche 3 drückt. Die Mitnehmerscheibe 2 ist im einfachsten Fall drehfest, falls erforderlich mittels eines Drehfeder/dämpfer-5 Satzes auf einer Welle 4 angeordnet, welche die Eingangswelle eines Getriebes ist. Die Gegenfläche 3 wird durch ein Schwungrad 5 einer nicht dargestellten Verbrennungskraftmaschine gebildet. Die Mitnehmerscheibe 5 weist Reibbeläge zur Anlage an der Gegenfläche 3 an der Druckplatte 1 auf. An einem radial äußeren Abschnitt der Druckplatte 1 greift eine Kupplungsfeder 6 an, die die Druckplatte 1 zur Gegenfläche 3 hindrückt.

Um die Druckplatte 1 aus ihrer eingekuppelten Stellung gegen die Kraft der Kupplungsfeder 6 in die ausgekuppelte Stellung zu bewegen, in der die Kupplung getrennt wird, ist eine Ausrückvorrichtung 7 vorgesehen. Diese umfaßt einen Zugmechanismus 8, der einerseits an der Druckplatte 1 und andererseits an einem hydraulischen Zentralausrücker 9 befestigt ist. In den Zugmechanismus 8 integriert ist ein Ausrücklager 10 mit Wälzkörpern 11.

Der Zugmechanismus 8 umfaßt ein äußeres Lagerteil 12, das mit der Druckplatte 1 verbunden ist, und ein inneres Lagerteil 13, das mit dem Zentralausrücker 9 verbunden ist. Zwischen den Lagerteilen 12, 13 sind die Wälzkörper 11 des Ausrücklagers 10 angeordnet. Das Ausrücklager 10, welches als Schulterkugellager ausgeführt ist dabei so dimensioniert, daß die gegenüber herkömmlichen Zentralausrückern erhöhten Kräfte aufgenommen werden können.

Die Ausrückvorrichtung 7 ist hydraulisch betätigbar und weist hierzu ein erstes Hydraulikelement 15 und ein relativ zu diesem bewegbares zweites Hydraulikelement 16 auf. Das erste und das zweite Hydraulikelement 15, 16 grenzen an einen gemeinsamen Hydraulikraum 17 an und stehen über die in dem Hydraulikraum 17 aufgenommene Hydraulikflüssigkeit in Wirkverbindung. Das erste Hydraulikelement 15 weist zwei erste Führungsflächen 18, 18' auf, die mit zweiten Führungsflächen 19, 19' des zweiten Hydraulikelements 16 paarweise zusammenwirken. Dabei sind die Führungsflächen 18, 18' und 19, 19' als um die Welle 4 ringförmig umlaufende Gleitflächen ausgebildet, die konzentrisch angeordnet sind.

Das erste und das zweite Hydraulikelement 15, 16, sind jeweils stufenförmig ausgebildet, so daß die Führungsflächenpaare 18, 19 radial weiter innen liegen als die Führungsflächenpaare 18, 19. Dabei liegt das Führungsflächenpaar 18, 19 auf der in axialer Richtung einen Seite des Hydraulikraums 17 und das Führungsflächenpaar 18', 19' auf der anderen. Das erste und das zweite Hydraulikelement 15, 16 begrenzen einen gemeinsamen Hydraulikraum 17, der als ringförmig um die Welle 4 umlaufende Kammer ausgebildet ist. Der Hydraulikraum 17 kann über einem mit diesem verbundenen Anschluß 21 an eine nicht dargestellte Hydraulikleitung angeschlossen werden.

Zur Abdichtung des Hydraulikraums 17 sind im Bereich der Führungsflächen 18, 18' Dichtringe 22, 23 angeordnet.

Der Anschluß 21 ist am höchsten Punkt des Hydraulikraums 17 angeordnet, um ein besonders einfaches Entlüften zu gewährleisten.

Weiterhin sind in dem Hydraulikraum 17 Federn 24 angeordnet, welche das erste und das zweite Hydraulikelement 15, 16 in axialer Richtung auseinander drücken und so das Ausrücklager 10 unter einer definierten Vorspannkraft halten.

Zum Trennen der Kupplung wird über den Anschluß 21 Hydraulikflüssigkeit unter Druck in den Hydraulikraum 17 eingepreßt, so daß das radial innen angeordnete zweite Hydraulikelement 16 in axialer Richtung relativ zu dem radial außen angeordneten ersten Hydraulikelement 15 weg von der Gegenfläche 3 beziehungsweise dem Mitnehmer 2 bewegt wird. Diese Bewegung wird über das erste Zugelemente 25 und mittels eines radial federnden aber axial steifen Schnappelements 30 auf das Ausrücklager 10 und von diesem auf das zweite Zugelement 26 übertragen, mit der Folge, daß die Druckplatte 1 entgegen der Kraft der Kupplungsfeder 6 aus der eingekuppelten Stellung in die ausgekuppelte Stellung gezogen wird.

Weiterhin sind zwischen erstem und zweitem Hydraulikelement 15, 16 auf der der Gegenfläche 3 zugewandten Seite ein Dichtungsbalg 27 angeordnet. Ein vergleichbarer Dichtungsbalg 28 ist auf der der Gegenfläche 3 abgewandten Seite zwischen dem zweiten Hydraulikelement 16 und dem Gehäuse 20 des Getriebes angeordnet.

Bei kleinem Schmutzanfall kann bei kleiner Querschnittsfläche im Bereich A zwischen Zugelement 25 und Welle 4 der Faltenbalg 28 entfallen. Eine kleine Querschnittsfläche im Bereich A wird dadurch erreicht, daß das Zugelement 25 einen radial weiter innen liegenden ersten Abschnitt und einen radial weiter außen liegenden zweiten Abschnitt aufweist.

Ein besonderer Vorteil der erfindungsgemäßen Gestaltung des Ausrückers 9 ist, daß dieser im Durchmesser klein baut Infolgedessen steht ein größerer Bauraum für einen nur schematisch dargestellten drehzahladaptiven Schwingungstilger 29 zur Verfügung, welcher über nicht dargestellte Verbindungsmittel an dem Schwungrad 5 festgelegt ist.

Zur Erleichterung der Montage der Kupplung ist zur Verbindung des Zugelements 25 und der inneren Lagerschale 13 ein federndes Schnappelement 30 vorgesehen, welches einen Formschluß zwischen der inneren Lagerschale 13 und dem Zugelement 25 herstellt.

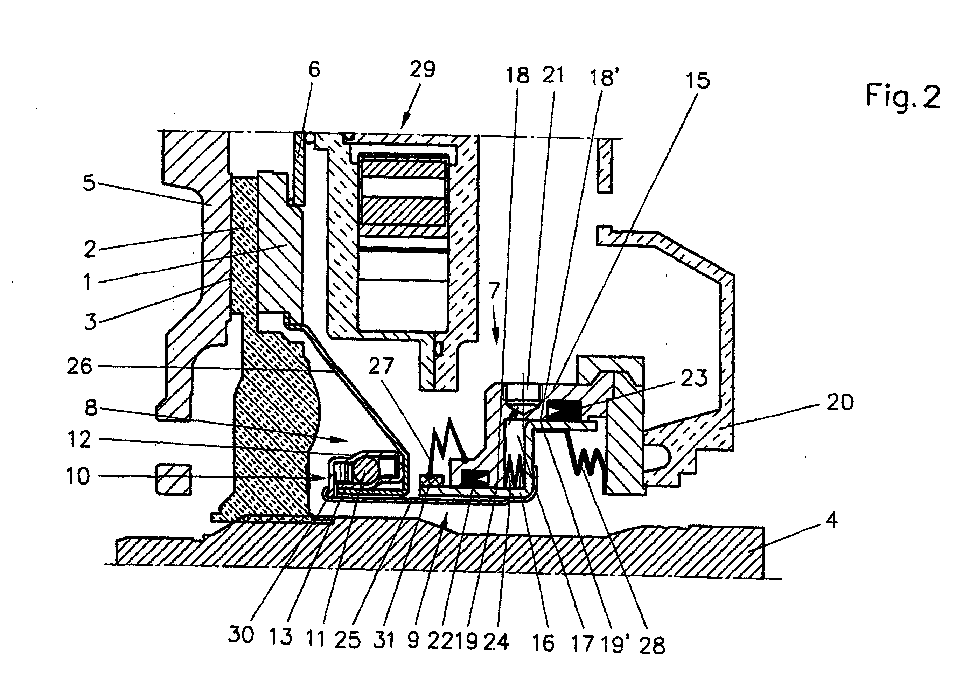

Figuren 2 bis 4 zeigen weitere Ausführungsformen der erfindungsgemäßen Kupplung. Dabei sind übereinstimmende Teile mit den selben Bezugszeichen versehen wie in Figur 1.

Bei der in Figur 2 dargestellten Ausführungsform ist das Ausrücklager 10 anders gestaltet als in Figur 1. Das äußere Lagerteil 12 ist über das erste Zugelement 25 mit dem Zentralausrücker verbunden, während das innere Lagerteil 13 über das zweite Zugelement 26 mit der Druckplatte 1 verbunden ist. Somit weist das Ausrücklager 11 einen drehenden Innenring 13 auf, während bei der in Figur 1 dargestellten Ausführungsform ein drehender Außenring 12 vorgesehen ist.

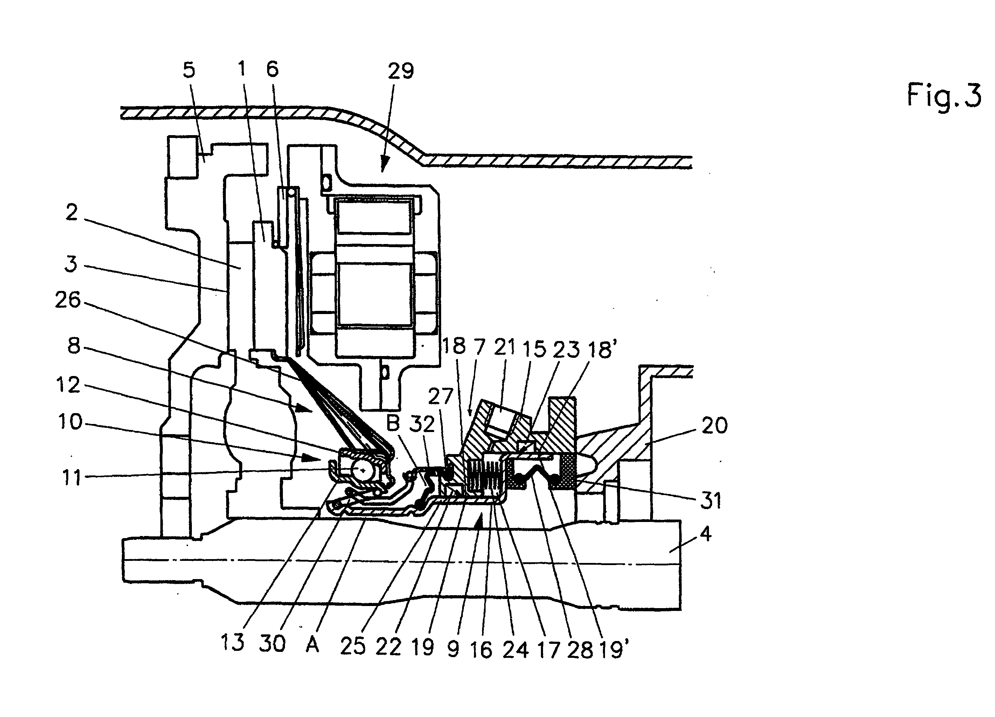

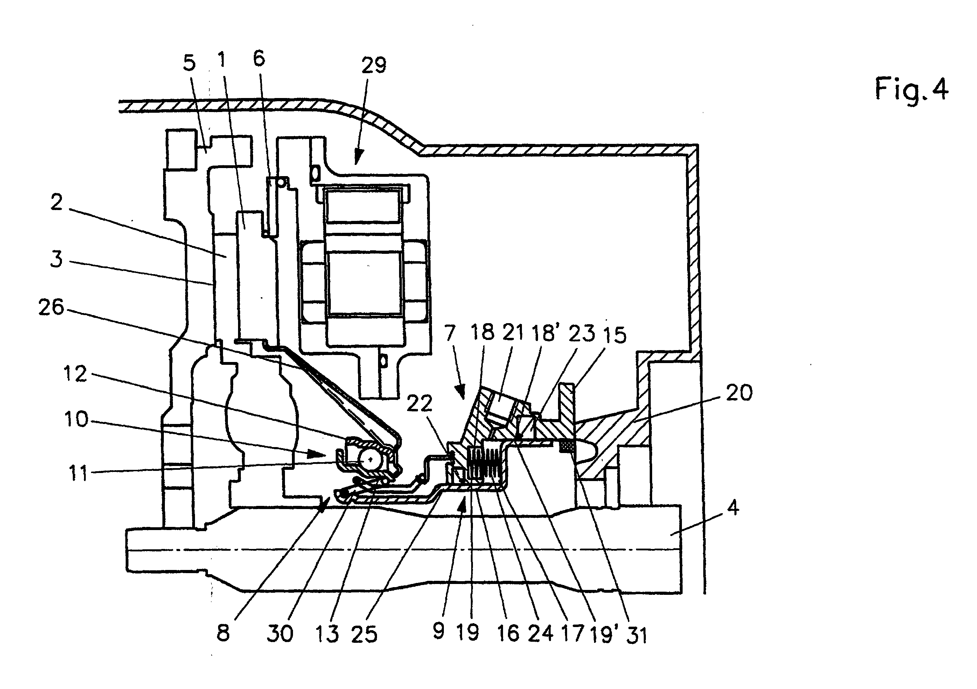

Bei den in den Figuren 3 und 4 dargestellten Ausführungsformen der Erfindung ist an dem ersten Hydraulikelement 15 ein ringförmiges, in Umfangsrichtung geschlossenes Vorsatzteil 32 angeordnet. Dieses bildet nach Art eines Labyrinths einen Raum B, welcher ein Schmutzdepot bildet. Dies macht es möglich, auf den Faltenbalg 27 in Fällen kleinen Schmutzanfalls zu verzichten, wie in Figur 4 dargestellt. Dabei wird eine weitere Verbesserung dadurch erzielt, daß das Vorsatzteil 32, wie in Figur 4 dargestellt, einen radial nach innen ragenden Abschnitt aufweist. Weiterhin ist an dem Vorsatzteil 32 ein Entriegelungselement vorgesehen, durch welches das Schnappelement 30 ausgerastet werden kann, um die Ausrückvorrichtung 7 von der Welle 4 abzuziehen.

## Patentansprüche

1. Kupplung mit einer Druckplatte (1), welche in einer eingekuppelten Stellung eine Mitnehmerscheibe (2) gegen eine Gegenfläche (3) drückt und welche zum Trennen der Kupplung durch eine Ausrückvorrichtung (7) in eine ausgekuppelte Stellung bewegt werden kann, in der die Druckplatte (1) die Mitnehmerscheibe (2) nicht gegen die Gegenfläche (3) drückt, wobei die Ausrückvorrichtung (7) hydraulisch betätigbar ist und ein erstes Hydraulikelement (15) und ein relativ zu diesem bewegbares zweites Hydraulikelement (16) umfasst, wobei das erste und das zweite Hydraulikelement (15, 16) an einen gemeinsamen Hydraulikraum (17) angrenzen und über die in dem Hydraulikraum (17) aufgenommene Hydraulikflüssigkeit in Wirkverbindung stehen, wobei das erste Hydraulikelement (15) wenigstens zwei erste Führungsflächen (18, 18') aufweist, die mit zweiten Führungsflächen (19, 19') des zweiten Hydraulikelements (16) zusammenwirken und wobei die wenigstens zwei ersten Führungsflächen (18,18') in radialer Richtung außen zu den zweiten Führungsflächen (19,19') angeordnet sind, **dadurch gekennzeichnet, dass** an dem ersten und/oder dem zweiten Hydraulikelement (15, 16) im Bereich der Führungsflächen (18,18',19,19') ein Haltering (31) angeordnet ist, der bei einer ersten Betätigung der Kupplung durch die Relativbewegung von erstem und zweitem Hydraulikelement (15, 16) aus einer Halteposition in eine Endposition verschoben-wird.

2. Kupplung nach Anspruch 1, **dadurch gekennzeichnet, dass** die Ausrückvorrichtung (7) einen Zugmechanismus (8) umfasst, der beim Trennen der Kupplung die Druckplatte (1) aus der eingekuppelten Stellung in die ausgekuppelte Stellung zieht.

3. Kupplung nach Anspruch 2, **dadurch gekennzeichnet, dass** der Zugmechanismus (8) mittels der ersten und zweiten Hydraulikelemente (15,16) betätigbar ist.

4. Kupplung nach einem der Ansprüche 1 bis 3, **dadurch gekennzeichnet, dass** das erste Hydraulikelement (15) relativ zu einem Gehäuse (20) der Kupplung festgelegt ist.

5. Kupplung nach Anspruch 4, **dadurch gekennzeichnet, dass** an dem ersten Hydraulikelement (15) ein Anschluss (21) für Hydraulikflüssigkeit angeordnet ist.

6. Kupplung nach Anspruch 4 oder 5, **dadurch gekennzeichnet, dass** der Anschluss (21) am höchsten Punkt des Hydraulikraums (17) angeordnet ist.

7. Kupplung nach einem der Ansprüche 1 bis 3, **dadurch gekennzeichnet, dass** das zweite Hydraulikelement (16) relativ zu einem Gehäuse (20) der Kupplung festgelegt ist.

8. Kupplung nach einem der Ansprüche 1 bis 7, **dadurch gekennzeichnet, dass** der Haltering (31) aus Kunststoff gefertigt ist.

9. Kupplung nach einem der Ansprüche 1 bis 8, **dadurch gekennzeichnet, dass** der Hydraulikraum (17) durch im Bereich der Führungsbahnen angeordnete Dichtungsmittel (22,23) abgedichtet ist.

10. Kupplung nach einem der Ansprüche 1 bis 9, **dadurch gekennzeichnet, dass** zwischen erstem und zweitem Hydraulikelement (15, 16) wenigstens eine Feder (24) wirkt, welche das erste und das zweite Hydraulikelement (15,16) in axialer Richtung auseinander drückt.

## Claims

1. A clutch with a pressure plate (1) which in an engaged position presses a driver plate (2) against a corresponding face (3) and which can be moved to disconnect the clutch by means of a disengagement device (7) into a decoupled position in which the pressure plate (1) does not press the driver plate (2) against the corresponding face (3), the disengagement device (7) being capable of being hydraulically activated and comprising a first hydraulic element (15) and a second hydraulic element (16) which can be moved
relative to the latter, the first and second hydraulic elements (15, 16) adjoining a common hydraulic space (17) and being operatively connected by means of the hydraulic fluid which is held in the hydraulic space (17), the first hydraulic element (15) having at least two first guide faces (18, 18') which interact with second guide faces (19, 19') of the second hydraulic element (16), the at least two first guide faces (18, 18') being arranged radially on the outside with respect to the second guide faces (19, 19'), **characterized in that** a securing ring (31), which is displaced from a securing position into an end position by the relative movement of the first and second hydraulic element (15, 16) when the clutch is first activated, is arranged on the first and/or second hydraulic element (15, 16) in the region of the guide faces (18, 18', 19, 19').

2. A clutch according to claim 1, **characterized in that** the disengagement device (7) comprises a pulling mechanism (8) which, when the clutch is opened, pulls the pressure plate (1) out of the engaged position into the decoupled position.

3. A clutch according to claim 2, **characterized in that** the pulling mechanism (8) can be activated by means of the first and second hydraulic elements (15, 16).

4. A clutch according to any of claims 1 to 3, **characterized in that** the first hydraulic element (15) is secured in relation to a housing (20) of the clutch.

5. A clutch according to claim 4, **characterized in that** a port (21) for hydraulic fluid is arranged on the first hydraulic element (15).

6. A clutch according to claim 4 or 5, **characterized in that** the port (21) is arranged at the highest point of the hydraulic space (17).

7. A clutch according to any of claims 1 to 3, **characterized in that** the second hydraulic element (16) is fixed relative to a housing (20) of the clutch.

8. A clutch according to any of claims 1 to 7, **characterized in that** the securing ring (31) is fabricated from plastic.

9. A clutch according to any of claims 1 to 8, **characterized in that** the hydraulic space (17) is sealed by sealing means (22, 23) arranged in the region of the guide tracks.

10. A clutch according to any of claims 1 to 9, **characterized in that** at least one spring (24) which presses the first and second hydraulic element (15, 16,) apart in the axial direction acts between the first and second hydraulic element (15, 16).

## Revendications

1. Embrayage comprenant une plaque de pression (1) qui, dans une position embrayée, presse un disque d'entraînement (2) contre une contre-surface (3) et qui, pour désolidariser l'embrayage, peut être déplacée, grâce à un dispositif de débrayage (7), dans une position débrayée dans laquelle la plaque de pression (1) ne presse pas le disque d'entraînement (2) contre la contre-surface (3), le dispositif de débrayage (7) pouvant être commandé hydrauliquement et comprenant un premier élément hydraulique (15) et un second élément hydraulique (16) mobile par rapport à celui-ci, le premier et le second éléments hydrauliques (15, 16) étant contigus à un espace hydraulique commun (17) et une liaison active étant établie entre eux par le biais du fluide hydraulique reçu dans l'espace hydraulique (17), le premier élément hydraulique (15) étant pourvu d'au moins deux premières surfaces de guidage (18, 18') qui coopèrent avec des secondes surfaces de guidage (19, 19') du second élément hydraulique (16) et les au moins deux premières surfaces de guidage (18, 18') étant situées à l'extérieur, dans le sens radial, par rapport aux secondes surfaces de guidage (19, 19'), **caractérisé en ce qu'**une bague de maintien (31) est située dans la zone des surfaces de guidage (18, 18', 19, 19') au niveau du premier et/ou du second élément hydraulique (15, 16), laquelle bague est déplacée d'une position de maintien dans une position finale, lors d'un premier actionnement de l'embrayage, par le mouvement relatif du premier et du second éléments hydrauliques (15, 16).

2. Embrayage selon la revendication 1, **caractérisé en ce que** le dispositif de débrayage (7) comprend un mécanisme de traction (8) qui tire la plaque de pression (1) de la position embrayée dans la position débrayée lors de la désolidarisation de l'embrayage.

3. Embrayage selon la revendication 2, **caractérisé en ce que** le mécanisme de traction (8) peut être commandé au moyen des premier et second éléments hydrauliques (15, 16).

4. Dispositif selon l'une des revendications 1 à 3, **caractérisé en ce que** le premier élément hydraulique (15) est fixé par rapport à un carter (20) de l'embrayage.

5. Embrayage selon la revendication 4, **caractérisé en ce que** le premier élément hydraulique (15) est pourvu d'un raccord (21) pour un fluide hydraulique.

6. Embrayage selon la revendication 4 ou 5, **caractérisé en ce que** le raccord (21) est situé au niveau du point le plus haut de l'espace hydraulique (17).

7. Dispositif selon l'une des revendications 1 à 3, **caractérisé en ce que** le second élément hydraulique (16) est fixé par rapport à un carter (20) de l'embrayage.

8. Dispositif selon l'une des revendications 1 à 7, **caractérisé en ce que** la bague de maintien (31) est formée d'une matière plastique.

9. Dispositif selon l'une des revendications 1 à 8, **caractérisé en ce que** l'espace hydraulique (17) est rendu étanche par des moyens d'étanchéité (22, 23) situés dans la zone des glissières de guidage.

10. Dispositif selon l'une des revendications 1 à 9, **caractérisé en ce qu'**au moins un ressort (24) agit entre le premier et le second éléments hydrauliques (15, 16), ressort dont la pression écarte l'un de l'autre le premier et le second éléments hydrauliques (15, 16) dans le sens axial.
